# EUROPEAN PATENT SPECIFICATION

(11) **EP 3 238 545 B1**
(45) Date of publication and mention of the grant of the patent: **06.11.2019**
(21) Application number: 15872708.1
(22) Date of filing: 09.12.2015
(51) Int. Cl.: A23L 2/02, A23L 2/56, A23L 2/64, A23L 27/12, A23L 2/52, A23L 27/10

(54) **BEVERAGE CONTAINING LEMON JUICE**
GETRÄNK MIT ZITRONENSAFT
BOISSON CONTENANT DU JUS DE CITRON

(30) Priority: 22.12.2014 JP 2014259222
(43) Date of publication of application: 01.11.2017
(73) Proprietor: Suntory Holdings Limited, Kita-ku, Osaka-shi Osaka 530-8203 (JP)
(72) Inventor: ICHIMURA, Atsushi, Kawasaki-shi Kanagawa 211-0067 (JP); MIYAO, Yuki, Kawasaki-shi Kanagawa 211-0067 (JP); SENGA, Yoshinori, Kawasaki-shi Kanagawa 211-0067 (JP)
(74) Representative: Vossius & Partner Patentanwälte Rechtsanwälte mbB
(86) International application number: PCT/JP2015/084465
(87) International publication number: WO 2016/104139

(56) References cited:
- WO-A1-2005/048743
- WO-A1-2013/143822
- JP-A- 2003 533 196
- JP-A- 2004 091 742
- JP-A- 2012 503 485
- JP-A- 2012 503 485

## Description

### TECHNICAL FIELD

The present invention relates to a beverage containing lemon juice, and more particularly to a lemon juice-containing beverage which gives a fresh sensation typical of lemon regardless of its low fruit juice content.

### BACKGROUND ART

Lemon-based beverages gain popularity due to their refreshing sensation derived from the acid taste and aroma characteristic of lemon. A wide variety of lemon-flavored beverages are commercially available. When packaged beverages based on citrus fruit juice like lemon are produced, the juice has to be sterilized by heat from the viewpoints of keeping quality and hygiene. However, the fresh aroma and flavor inherent in freshly extracted fruit juice are reduced by heat sterilization and subsequent storage. For this reason, to make up for the shortcomings in the aroma and flavor characteristic of citrus fruit juice, a citrus fruit flavor, in addition to fruit juice, is added to beverages. For example, Patent Literature 1 provides disclosures about a fruit juice-containing beverage comprising a citrus fruit juice and a sugar so as to give a fruit juice content of not less than 30% and not more than 70%, stating that beverages with a natural and fresh citrus fruit flavor can be produced by adjusting the concentration of a flavor to be included in a beverage so as to ensure that the ratio of the total amount of particular esters to that of particular terpenic hydrocarbons falls within the particular range.

### CITATION LIST

### PATENT LITERATURE

Patent Literature 1: Japanese Patent Application Publication No. JP 2011-167171 and WO 2005/048743 A1 disclose lemon juice-containing beverages comprising a flavour.

### SUMMARY OF INVENTION

### TECHNICAL PROBLEM

Among various citrus fruits, lemon is a fruit having too strong an acid taste to eat raw, and lemon juice itself cannot be consumed as a drink. Therefore, in the process of production of lemon-flavored beverages, not only lemon juice but also a lemon flavorant or a lemon flavor are generally added to beverages to reproduce the flavor of lemon. However, it was known that this approach is problematic because beverages produced simply by adding a conventional lemon flavorant or lemon flavor to a small amount of lemon juice are lacking in a fresh sensation and a robust flavor -- in other words, lacking in so-called "real lemon-like qualities". The present invention has as its object to produce a beverage with authentic lemon-like qualities, which has a low fruit juice content but makes one perceive a refreshing sensation typical of lemon and such a fresh aroma as perceived when a lemon is peeled.

### SOLUTION TO PROBLEM

The present inventors have made intensive studies to achieve the aforementioned object, and as a result, found that when 1 ppb or more of at least one phenylpropene selected from the group consisting of safrole, methyleugenol, and myristicin is incorporated in a lemon juice-containing beverage having a low level of fruit juice content which is in the range of 1 to 30% and comprising at least one aroma component selected from the group consisting of linalool, nonanal, and decanal, the lemon juice-containing beverage can be improved in terms of lemon-like qualities. Safrole, methyleugenol, and myristicin are slightly spicy aroma components typically present in cinnamon or nutmeg, and are not aroma components characteristic of lemon. It was a surprise that adding such an aroma component derived from a different source from lemon leads to an improvement of a beverage in terms of "lemon-like qualities". The present invention includes, but is not limited to, the following.
[1] A lemon juice-containing beverage, comprising:
   (a) at least one aroma component selected from the group consisting of linalool, nonanal, and decanal, and
   (b) 1 ppb or more of at least one phenylpropene selected from the group consisting of safrole, methyleugenol, and myristicin;
   the beverage having a fruit juice content of not less than 1% and not more than 30%.
[2] The beverage as set forth in [1], wherein when the total amount of linalool, nonanal, and decanal is taken as (a) and the total amount of safrole, methyleugenol, and myristicin is taken as (b), the ratio (by weight) of (b)/(a) is not more than 10.
[3] The beverage as set forth in [1] or [2], further comprising nootkatone.
[4] The beverage as set forth in any one of [1] to [3], having an acidity (in terms of citric acid) of not more than 0.6%.
[5] The beverage as set forth in any one of [1] to [4], having a sugar/acid ratio of 10 to 40.
[6] The beverage as set forth in any one of [1] to [5], wherein the percentage of a lemon juice content relative to the fruit juice content of the beverage is not less than 50%.

### ADVANTAGEOUS EFFECTS OF INVENTION

When 1 ppb or more of at least one phenylpropene selected from the group consisting of safrole, methyleugenol, and myristicin is incorporated in a lemon juice-containing beverage having a fruit juice content of not less than 1% and not more than 30% and comprising at least one aroma component typically present in lemon, which is selected from the group consisting of linalool, nonanal, and decanal, authentic "lemon-like qualities" -- such as a refreshing sensation typical of lemon, and a fresh aroma as perceived when a lemon is peeled -- can be imparted to the beverage. The phenylpropenes mentioned above are slightly spicy components typically present in cinnamon and nutmeg, and are not aroma components characteristic of lemon. It is surprising that adding such an aroma component different from a lemon aroma component leads to an improvement of a beverage in terms of "lemon-like qualities". It was known that aroma components characteristic of citrus fruits like lemon are decreased and altered by heat sterilization or during storage to produce a peculiar flavor and deterioration odor called retort odor or potato odor, thereby deteriorating a fresh fruit sensation of a beverage (Patent Literature 1). The beverage of the present invention has the following effects: since the beverage has a low fruit juice content, this beverage makes one less perceive deterioration odor generated by deterioration of citrus fruit juice; and the presence of a spicy aroma component(s), phenylpropene(s), allows the beverage to maintain its refreshing sensation and makes it easier for the beverage to give a fresh sensation.

### DESCRIPTION OF EMBODIMENTS

The present invention is directed to a lemon juice-containing beverage, comprising: at least one aroma component typically present in lemon, which is selected from the group consisting of linalool, nonanal, and decanal; and 1 ppb or more of at least one phenylpropene selected from the group consisting of safrole, methyleugenol, and myristicin, the beverage having a fruit juice content of not less than 1% and not more than 30%.

### (Lemon-like aroma components)

The beverage of the present invention comprises at least one aroma component selected from the group consisting of linalool, nonanal, and decanal. Linalool is a monoterpene alcohol represented by the molecular formula C₁₀H₁₈O and is an aroma component abundant in essential oils of rosewood or lavender, but this component can also be found in citrus fruits. Nonanal is an aldehyde represented by the molecular formula C₉H₁₈O and is an aroma component with a floral aroma which is present in essential oils of lemon or lime. Decanal is an aldehyde represented by the molecular formula C₁₀H₂₀O and is an aroma component with a citrus fruit aroma which is present in essential oils of grapefruit or lemongrass. Linalool, nonanal, and decanal are all components that are commonly found in commercial beverages produced with a lemon flavor.

The beverage of the present invention comprises at least one of these aroma components commonly found in beverages produced with a lemon flavor. The amounts of these lemon-like aroma components are not particularly limited as long as the lemon-like qualities of the beverage are not impaired. For example, linalool is present in an amount of about 50 to 1300 ppb, nonanal in an amount of about 5 to 250 ppb, and decanal in an amount of about 10 to 200 ppb. The total amount of linalool, nonanal, and decanal is preferably in the range of 65 to 1800 ppb, more preferably in the range of about 100 to 1500 ppb. The beverage of this invention comprises preferably at least two, more preferably all, of linalool, nonanal, and decanal.

Linalool, nonanal, and decanal may be added to the beverage as part of a commercial flavor such as a lemon flavor, or may be derived from a natural source, such as fruit juice.

### (Phenylpropenes)

The beverage of the present invention also comprises at least one phenylpropene selected from the group consisting of safrole, methyleugenol, and myristicin. Safrole (molecular formula: C₁₀H₁₀O₂), methyleugenol (molecular formula: C₁₁H₁₄O₂), and myristicin (molecular formula: C₁₁H₁₂O₃) are all compounds having a phenylpropene backbone, and are components with a slightly spicy aroma which are typically present in nutmeg or cinnamon. Generally, these are not components characteristic of lemon. The beverage of this invention is based on the finding that when 1 ppb or more of a phenylpropene, which seems to be not relevant to lemon, is incorporated in a beverage, the beverage is surprisingly improved significantly in terms of favorable, lemon-like qualities.

The beverage of the present invention also comprises at least one of safrole, methyleugenol, and myristicin at a concentration of 1 ppb or more. The present inventors measured the amounts of phenylpropenes in lemon-flavored beverage products that were commercially available at the time of the filing of the present application, and as a result found that every of safrole, methyleugenol, and myristicin is present in the products only at a concentration of less than 1 ppb.

Speaking of the amounts of the different phenylpropenes in the inventive beverage, safrole is present in an amount of preferably about 1 to 100 ppb, more preferably about 1 to 50 ppb. Methyleugenol is present in an amount of preferably about 1 to 100 ppb, more preferably about 1 to 40 ppb. Myristicin is present in an amount of preferably about 1 to 400 ppb, more preferably about 1 to 250 ppb. The total amount of safrole, methyleugenol, and myristicin is preferably in the range of about 1 to 700 ppb, more preferably in the range of about 3 to 350 ppb. The beverage of this invention comprises preferably at least two, more preferably all, of safrole, methyleugenol, and myristicin.

The different phenylpropenes may be added to the beverage as part of a commercial flavor, or may be derived from a natural source. The phenylpropenes are not components abundant in fruit juice; thus, in order to incorporate 1 ppb or more of such a phenylpropene(s) in the process of producing the beverage of the present invention, it is generally necessary to add a flavorant or flavor containing said phenylpropene(s). Flavorants or flavors containing said phenylpropene(s) are commercially available.

In the present invention, the ratio of the total amount (a) of linalool, nonanal, and decanal to the total amount (b) of safrole, methyleugenol, and myristicin (*i.e.,* the ratio of (b)/(a)) is preferably not more than 10, more preferably not more than 5, still more preferably not more than 1.5. When the ratio of (b)/(a) is too high, the spicy aroma may become too prominent, thereby making it difficult for the beverage to maintain its lemon-like qualities.

### (Fruit juice content)

The beverage of the present invention has a fruit juice content of not less than 1% and not more than 30%. As referred to above, the "fruit juice content" refers to the relative concentration of a fruit juice with respect to a straight fruit juice obtained by squeezing a fruit, which is taken as 100%. For example, the fruit juice content can be calculated based on the criteria (given below) of sugar refractometer reading or acidity for different straight fruit juices as defined in the JAS (Japanese agricultural standard for fruit beverages):
(Criteria of sugar refractometer reading (°Bx))
   - Orange (*Citrus sinensis*), *Citrus reticulata* var *poonensis:* 11
   - *Citrus hassaku, Citrus iyo*: 10
   - *Citrus unshiu,* grapefruit, *Citrus natsudaidai*: 9
   - *Citrus depressa*: 8
(Criteria of acidity (in terms of citric acid) (%))
   - Lemon: 4.5
   - Lime: 6

For example, the criterion of acidity for lemon juice according to the JAS standard is 4.5% in terms of citric acid; thus, if 6% by weight of a concentrated lemon juice with an acidity of 22.5% is incorporated in a beverage, it will then follow that the fruit juice content of the beverage is 30%. Likewise, as for other fruits not listed above, the fruit juice content can be calculated by determining the relative concentration of a fruit juice with respect to a straight fruit juice which is taken as 100%. For example, if 5% by weight of a 200% concentrated fruit juice is used in a beverage, it will then follow that the fruit juice content of the beverage is 10%.

If different types of fruit juices are used in the beverage of the present invention, the fruit juice content is determined by totaling the respective fruit juice contents calculated for all the types of fruits according to the aforementioned procedure. Additionally, it should be noted that the fruit juice content, thus calculated, generally corresponds to the percentage of fruit juice as indicated in a packaged, fruit juice-containing beverage (*i.e.,* a value indicated as "n% fruit juice").

The beverage of the present invention has a fruit juice content of not less than 1% and not more than 30%, preferably not less than 1% and not more than 20%, more preferably not less than 3% and not more than 20%. The beverage of this invention is characterized in that it has a relatively low fruit juice content but is improved in terms of real fruit-like qualities, more specifically lemon-like qualities, by incorporating a spicy aroma component(s), phenylpropene(s), as mentioned above.

### (Fruit juice)

The beverage of the present invention comprises at least lemon juice, and may further comprise any other fruit juices such as juices of the citrus fruits mentioned above, in addition to lemon juice. The content of lemon juice in the beverage of this invention is not less than 1% and not more than 30%, preferably not less than 1% and not more than 20%, more preferably not less than 3% and not more than 20%. If the fruit juice content is less than 1%, the beverage may be deteriorated in terms of lemon-like qualities. If the fruit juice content is more than 30%, the beverage may be unfit for drinking since the acid taste of lemon juice is too strong.

When not only lemon juice but also any other fruit juices are used in the present invention, any types of fruit juices can be used, and in particular, citrus fruit juices, such as mandarin orange (*Citrus sinensis*) juice, *Citrus unshiu* juice, mandarin juice, grapefruit juice, lime juice, *Citrus junos* juice, *Citrus sphaerocarpa* juice, *Citrus sudachi* juice, and *Citrus depressa* juice, are preferred since they are superior in compatibility with lemon juice. When lemon juice and any other fruit juices are used in combination, the percentage of the lemon juice content with respect to the total fruit juice content is preferably not less than 50%, more preferably not less than 60%.

Any types of fruit juices, such as straight fruit juice or concentrated fruit juice, can be used regardless of their preparation method. In consideration of ease of handling, a from-concentrate juice is preferred.

### (Nootkatone)

It is preferred that, in addition to the aroma component(s) mentioned above, nootkatone should also be contained in the beverage, since the beverage is improved in terms of fresh lemon-like qualities. Therefore, as a preferred mode of the present invention, the beverage may further comprise nootkatone. Nootkatone is a sesquiterpene ketone represented by the molecular formula C₁₅H₂₂O and is an aroma component characteristic of grapefruit. The content of nootkatone in the beverage is preferably in the range of 1 to 200 ppb, more preferably in the range of 20 to 200 ppb. It is not clear why the presence of nootkatone characteristic of grapefruit leads to an improvement of a beverage in terms of fresh lemon-like qualities. However, the present inventors presume as follows: when the aroma component reminiscent of grapefruit is included in a beverage in an amount within an appropriate range, the beverage is given a citrus refreshing sensation and a sense of citrus peel, which are characteristic of grapefruit, and as a result, the beverage is, in its entirety, improved in terms of citrus fruit-like qualities and a fresh sensation, and at the same time the beverage, which becomes reminiscent of a sense of lemon peel like grapefruit peel, is improved in terms of lemon-like qualities. Nootkatone may be added to the beverage as part of a commercial flavor, or may be derived from a fruit juice included in the beverage.

The amounts of a lemon-like aroma component(s), a phenylpropene(s), and nootkatone contained in the beverage can be measured using a known technique such as gas chromatography/mass spectroscopy (GC/MS). For example, the amounts of these components can be measured by the method described below in working examples.

### (Beverage)

In addition to the fruit juice(s) and aroma component(s) mentioned above, the beverage of the present invention may have added thereto any other additives which are commonly included in beverages, such as sugar, sweetener, acidulant, vitamin, coloring agent, antioxidant, emulsifier, preservative, seasoning, extract, pH adjustor, and quality stabilizer, as long as the lemon-like qualities of the beverage are not impaired.

The beverage of the present invention is a beverage having so-called "lemon-like qualities". The beverage having "lemon-like qualities" refers to beverages in general which remind consumers of lemon. The beverage of this invention is, in particular, a beverage that makes one perceive a fresh sensation, a refreshing sensation, and a lemon flavor as perceived when a lemon is peeled, or in other words is a so-called lemon-flavored beverage. The beverage of this invention may be improved in its lemon taste by adding a commercially available lemon flavorant or flavor.

In consideration of the beverage's lemon-like qualities, it is preferred that the beverage has an acid taste that is reminiscent of lemon. However, when the acid taste of the beverage is made too strong like a real lemon juice, the sense of acidity and bitterness becomes too prominent, so that the taste of the beverage becomes rather too obscure to be reminiscent of lemon. In the present invention, it was found that, by incorporating a specified amount of the aforementioned characteristic, slightly spicy aroma component(s), phenylpropene(s), there can be produced an easily drinkable beverage that makes one perceive lemon-like qualities without the need to make the acidity of the beverage too high. Therefore, the acidity (in terms of citric acid) of the beverage of this invention is preferably not more than 0.6%, more preferably not more than 0.5%, still more preferably not more than 0.45%. In consideration of lemon-like qualities, the lower limit of acidity is approximately 0.2%. The sugar/acid ratio of the beverage is preferred to be approximately in the range of 10 to 40, and in consideration of ease of drinking, said ratio is more preferred to be approximately in the range of 15 to 30. As known to those skilled in the art, the sugar/acid ratio of a beverage can be determined by calculating its ratio of a sugar refractometer reading (°Bx) to acidity (in terms of citric acid) (%).

The beverage of the present invention may also be a carbonated beverage. The carbonated beverage is preferred for some reasons as follows: the refreshing sensation of carbon dioxide goes well with the refreshing flavor of lemon; and carbon dioxide makes it easy to perceive the aroma of a beverage. When the beverage of this invention is provided as a carbonated beverage, the carbon dioxide pressure is preferably in the range of 1 to 3.8 kgf/cm², more preferably in the range of 1.2 to 2.4 kgf/cm². The carbon dioxide pressure can be measured using the gas volume analyzer GVA-500A produced by Kyoto Electronics Manufacturing Co., Ltd. For example, the carbon dioxide pressure is measured as follows: after a sample is brought to a temperature of 20°C, the bottle is degassed (snifted) and shaken in the aforementioned gas volume analyzer.

The beverage of the present invention can be provided as a packaged beverage through various steps including sterilization and packaging. A sterilized, packaged beverage can be produced, for example, by performing heat sterilization such as retort sterilization after filling a beverage composition into a package, or by sterilizing a beverage composition in advance before filling it into a package. More specifically, when the beverage of this invention is provided as a PET bottled beverage, a paper packed beverage, a glass bottled beverage, or a pouched beverage, FP or UHT sterilization which involves holding a beverage composition, for example, at 90 to 130°C for 1 to 60 seconds can be conducted. When the beverage of this invention is provided as a beverage packed in a metal container such as a can, sterilization (*e.g.,* at 65°C for 10 min) can be conducted after a specified amount of the beverage composition of this invention is filled into a container. When the beverage composition of this invention is provided as a packaged beverage, either of a hot pack filling method and an aseptic filling method can be used. The beverage of this invention is further advantageous in that, since the inventive beverage has a relatively low fruit juice content and contains a hard-to-deteriorate component(s), phenylpropene(s), at a specified ratio relative to linalool, which is easily deteriorated by heat or the like, the beverage hardly produces a peculiar flavor and can maintain its fresh flavor of lemon even when sterilized by heat.

Hereunder, the present invention will be described by way of working examples, but this invention is not limited to these examples.

### EXAMPLES

The amounts of lemon juice, orange juice, grapefruit juice, high-fructose corn syrup, granulated sugar, flavors, and water were adjusted to appropriate levels to prepare different beverages, which were then heat sterilized to thereby produce the beverages of Comparative Example 1 and Examples 1 to 11 as detailed below in Table 1. Also, carbon dioxide (gas pressure: 1.8 kg/cm²) was introduced into the beverage of Example 3 to produce the beverage of Example 12. The beverages of Comparative Example 1 and Examples 1 to 12 were packed in PET bottles. Further, two types of commercial lemon carbonated beverages were provided as Comparative Examples 2 and 3.

Table 1 shows the sugar refractometer readings (°Bx), acidities (in terms of citric acid) (%), lemon-like aroma component contents (linalool, nonanal, decanal) (ppb), spicy aroma component (phenylpropene) contents (safrole, methyleugenol, myristicin) (ppb), and nootkatone content (ppb) for the respective beverages. The aroma component contents were measured by the following procedure.

Five grams each of the different beverages was measured out, 3-heptanol was added as an internal standard, and extraction was conducted by the SBSE method for 30 minutes. After the extraction, the aroma components were introduced into and analyzed by GC/MS using a thermal desorber. These components were quantified by the standard addition method.

The different beverages were subjected to sensory evaluation by six panelists using a 5-point rating scale, to determine their sense of lemon (*i.e*., whether they are reminiscent of lemon), fresh sensation (*i.e.,* whether they can make one perceive a fresh aroma as perceived when a citrus fruit is peeled), and degree of pleasantness (*i.e.,* whether they can be consumed pleasantly as beverages). The evaluation on sense of lemon and fresh sensation was conducted based on the following criteria: 1 "not perceived at all"; 2 "hardly perceived"; 3 "perceived"; 4 "fairly perceived"; and 5 "strongly perceived". The evaluation on degree of pleasantness was conducted based on the following criteria: 1 "unpleasant"; 2 "not much pleasant"; 3 "neither pleasant nor unpleasant"; 4 "pleasant"; and 5 "very pleasant". The averages of the evaluation results obtained by the six panelists are also shown in Table 1.

**[Table 1]**

| | | Com. Ex 1 | Ex 1 | Ex 2 | Ex 3 | Ex 4 | Ex 5 | Ex 6 | Ex 7 | Ex 8 | Ex 9 | Ex 10 | Ex 11 | Ex 12 | Com. Ex 2 (commercial) | Com. Ex 3 (commercial) |
|---|---|---|---|---|---|---|---|---|---|---|---|---|---|---|---|---|
| Fruit juice content | Total | 5% | 5% | 5% | 5% | 5% | 5% | 5% | 5% | 5% | 20% | 20% | 20% | 5% | <10% | <10% |
| | Lemon juice | 3% | 3% | 3% | 3% | 3% | 3% | 3% | 3% | 3% | 12% | 12% | 12% | 12% | unknown | unknown |
| CO₂ gas | kgf/cm² | 0 | 0 | 0 | 0 | 0 | 0 | 0 | 0 | 0 | 0 | 0 | 0 | 1.8 | 1.8 | 1.6 |
| Property value | Bx | 10.3 | 10.3 | 10.3 | 10.3 | 10.3 | 10.3 | 10.3 | 10.3 | 10.3 | 10.3 | 10.3 | 10.3 | 10.3 | 8.48 | 9.95 |
| | % | 0.44 | 0.44 | 0.44 | 0.44 | 0.44 | 0.44 | 0.44 | 0.44 | 0.44 | 0.57 | 0.57 | 0.57 | 0.44 | 0.637 | 0.534 |
| | Sugar/acid | 23 | 23 | 23 | 23 | 23 | 23 | 23 | 23 | 23 | 18 | 18 | 18 | 23 | 13 | 19 |
| Lemon aroma component (A) (ppb) | Linalol | 223 | 223 | 223 | 223 | 391 | 223 | 112 | 391 | 1117 | 335 | 587 | 587 | 223 | 1056 | 107 |
| | Nonanal | 19 | 19 | 19 | 19 | 33.5 | 19 | 10 | 34 | 96 | 29 | 50 | 50 | 19 | 196.5 | 60 |
| | Decanal | 35 | 35 | 35 | 35 | 60.5 | 35 | 17 | 61 | 173 | 52 | 91 | 91 | 35 | 70.5 | 9.5 |
| | Total | 277 | 277 | 277 | 277 | 485 | 277 | 139 | 485 | 1386 | 277 | 485 | 485 | 277 | 1323 | 176.5 |
| Spicy aroma component (B) (ppb) | Safrole | 0 | <1ppb | 1.5 | 7.5 | 15 | 45 | 7.5 | 7.5 | 7.5 | 7.5 | 15 | 30 | 7.5 | <1ppb | <1ppb |
| | Methyleugenol | 0 | <1ppb | 1.2 | 6 | 12 | 36 | 6 | 6 | 6 | 6 | 12 | 24 | 6 | <1ppb | <1ppb |
| | Myristicin | 0 | 1.0 | 8.1 | 40.5 | 81 | 243 | 40.5 | 40.5 | 40.5 | 40.5 | 81 | 162 | 40.5 | <1ppb | <1ppb |
| | Total | 0 | 1.0 | 10.8 | 54 | 108 | 324 | 54 | 54 | 54 | 54 | 108 | 216 | 54 | - | - |
| (B)/(A) | | 0.000 | 0.004 | 0.039 | 0.195 | 0.223 | 1.170 | 0.390 | 0.111 | 0.039 | 0.195 | 0.223 | 0.445 | 0.195 | - | - |
| Nootkatone | | 41 | 41 | 41 | 41 | 41 | 41 | 41 | 41 | 41 | 164 | 164 | 164 | 41 | <1ppb | <1ppb |
| Sensory evaluation | Sense of lemon | 1.5 | 2.7 | 3.5 | 3.8 | 4.3 | 4.0 | 3.2 | 4.0 | 4.5 | 3.7 | 4.2 | 4.7 | 4.0 | 3.2 | 2.3 |
| | Fresh sensation | 1.8 | 2.5 | 3.8 | 3.7 | 4.3 | 4.7 | 3.3 | 4.0 | 3.8 | 3.5 | 3.7 | 4.7 | 4.0 | 2.5 | 1.8 |
| | Pleasantness | 2.2 | 3.0 | 3.7 | 3.8 | 4.3 | 4.0 | 3.2 | 4.3 | 4.2 | 3.2 | 3.3 | 4.2 | 4.0 | 2.0 | 2.0 |

The results for Comparative Example 1 and Example 1 revealed that the beverage of Example 1 which contains 1 ppb or more of at least one of safrole, methyleugenol, and myristicin showed improvements not only in sense of lemon and fresh sensation but also in degree of pleasantness, as compared to the beverage of Comparative Example 1 which contains none of these components. Since safrole, methyleugenol, and myristicin are all aroma components that seem to be not relevant to lemon aroma, it was a surprise that the presence of these components leads to an improvement of a beverage in terms of lemon-like qualities and a fresh sensation as perceived when a citrus fruit is peeled.

In the commercial lemon carbonated beverages (Comparative Examples 2 and 3) (both packages use a word or image reminiscent of lemon in their product names or labels), safrole, methyleugenol, and myristicin were all found to be present only in an amount of less than 1 ppb. As compared to the commercial beverages (Comparative Examples 2 and 3), the beverages of the present invention (Examples 1 to 12) were found to be pleasantly drinkable beverages which give a high sense of lemon and a high fresh sensation.

## Claims

1. A lemon juice-containing beverage, comprising:
(a) at least one aroma component selected from the group consisting of linalool, nonanal, and decanal, and
(b) 1 ppb or more of at least one phenylpropene selected from the group consisting of safrole, methyleugenol, and myristicin;
the beverage having a fruit juice content of not less than 1% and not more than 30%.

2. The beverage according to claim 1, wherein when the total amount of linalool, nonanal, and decanal is taken as (a) and the total amount of safrole, methyleugenol, and myristicin is taken as (b), the ratio (by weight) of (b)/(a) is not more than 10.

3. The beverage according to claim 1 or 2, further comprising nootkatone.

4. The beverage according to any one of claims 1 to 3, having an acidity (in terms of citric acid) of not more than 0.6%.

5. The beverage according to any one of claims 1 to 4, having a sugar/acid ratio of 10 to 40.

6. The beverage according to any one of claims 1 to 5, wherein the percentage of a lemon juice content relative to the fruit juice content of the beverage is not less than 50%.

## Patentansprüche

1. Ein Zitronensaft enthaltendes Getränk, umfassend:
(a) mindestens einen Aromabestandteil ausgewählt aus der Gruppe bestehend aus Linalool, Nonanal und Decanal und
(b) 1 ppb oder mehr mindestens eines Phenylpropens ausgewählt aus der Gruppe bestehend aus Safrol, Methyleugenol und Myristicin;
wobei das Getränk einen Fruchtsaftgehalt von nicht weniger als 1% und nicht mehr als 30% aufweist.

2. Das Getränk gemäß Anspruch 1, wobei die Gesamtmenge von Linalool, Nonanal und Decanal als (a) genommen wird und die Gesamtmenge von Safrol, Methyleugenol und Myristicin als (b) genommen wird, wobei das Verhältnis (in Gewicht) von (b)/(a) nicht mehr als 10 beträgt.

3. Das Getränk gemäß Anspruch 1 oder 2, ferner umfassend Nootkaton.

4. Das Getränk gemäß einem der Ansprüche 1 bis 3 mit einem Säuregehalt (bezogen auf Zitronensäure) von nicht mehr als 0,6%.

5. Das Getränk gemäß einem der Ansprüche 1 bis 4 mit einem Zucker/Säure-Verhältnis von 10 zu 40.

6. Das Getränk gemäß einem der Ansprüche 1 bis 5, wobei der Prozentsatz eines Zitronensaftgehalts relativ zum Fruchtsaftgehalt des Getränks nicht weniger als 50% beträgt.

## Revendications

1. Boisson contenant du jus de citron, comprenant :
(a) au moins un composant aromatique choisi dans le groupe constitué par le linalool, le nonanal, et le décanal, et
(b) 1 ppb ou plus d'au moins un phénylpropène choisi dans le groupe constitué par le safrole, le méthyleugénol, et la myristicine ;
la boisson ayant une teneur en jus de fruits non inférieure à 1 % et non supérieure à 30 %.

2. Boisson selon la revendication 1, dans laquelle, quand la quantité totale de linalool, de nonanal et de décanal est de (a) et la quantité totale de safrole, de méthyleugénol et de myristicine est de (b), le rapport (en poids) (b)/(a) n'est pas supérieur à 10.

3. Boisson selon la revendication 1 ou 2, comprenant en outre de la nootkatone.

4. Boisson selon l'une quelconque des revendications 1 à 3, ayant une acidité (en termes d'acide citrique) non supérieure à 0,6 %.

5. Boisson selon l'une quelconque des revendications 1 à 4, ayant un rapport sucre/acide de 10 à 40.

6. Boisson selon l'une quelconque des revendications 1 à 5, dans laquelle le pourcentage de la teneur en jus de citron par rapport à la teneur en jus de fruits de la boisson n'est pas inférieur à 50 %.
